# EUROPÄISCHE PATENTSCHRIFT

(11) **EP 2 089 662 B1**
(45) Veröffentlichungstag und Bekanntmachung des Hinweises auf die Patenterteilung: **11.01.2017**
(21) Anmeldenummer: 07846343.7
(22) Anmeldetag: 15.11.2007
(51) Int. Cl.: F24J 2/46

(54) **WASCHVERFAHREN UND WASCHAPPARAT FÜR SOLARKOLLEKTOREN**
WASHING METHOD AND APPARATUS FOR SOLAR PANELS
PROCÉDÉ ET DISPOSITIF DE NETTOYAGE DE CAPTEURS SOLAIRES

(30) Priorität: 15.11.2006 DE 102006053704
(43) Veröffentlichungstag der Anmeldung: 19.08.2009
(73) Patentinhaber: Novatec Solar GmbH, 76133 Karlsruhe (DE)
(72) Erfinder: MERTINS, Max, 79106 Freiburg (DE); SELIG, Martin, 76137 Karlsruhe (DE)
(74) Vertreter: Geitz Truckenmüller Lucht Christ
(86) Internationale Anmeldenummer: PCT/DE2007/002071
(87) Internationale Veröffentlichungsnummer: WO 2008/058528

(56) Entgegenhaltungen:
- WO-A-2004/091816
- DE-A1- 2 738 666
- DE-A1- 2 950 078
- DE-A1-102004 036 094
- DE-U1-202006 003 697
- JP-A- 3 192 775
- JP-A- 11 350 684
- JP-A- 62 013 084
- JP-A- 2004 186 632
- US-A- 3 934 573
- US-A- 4 275 711
- US-A1- 2003 066 158

## Beschreibung

Die Erfindung betrifft ein Verfahren und eine Vorrichtung zur Reinigung von Solarkollektoren mittels eines auf dem Solarkollektor verfahrbaren Waschapparats, welcher mithilfe von Waschdüsen und/oder Bürsten Waschwasser auf die Oberfläche des Solarkollektors aufbringt und die Oberfläche abwäscht.

Eine solche Vorrichtung ist bereits aus der DE 2738666 bekannt. Eine weitere Vorrichtung ist aus der deutschen Offenlegungsschrift DE 10 2004 036 094 A1 vorbekannt. Die genannte Erfindung betrifft einen Waschapparat, welcher auf einem verfahrbaren Schlitten im Bereich einer zu reinigenden Seite eines Solarkollektors angeordnet ist. Der Waschapparat übergreift den gesamten rinnenförmigen Solarkollektor, wobei auf der Innenseite des Waschapparats angeordnete Waschdüsen in einem Tank bevorratetes Waschwasser gegen den Kollektor sprühen. In Ablaufrichtung des Wassers ist unterhalb einer Unterkante des Kollektors dem Waschapparat eine Auffangrinne zugeordnet, in welche das über den Solarkollektor ablaufende Waschwasser aufgefangen wird. Das auf diese Weise aufgefangene Wasser kann gesammelt, gegebenenfalls wieder aufbereitet und wieder verwendet werden. Nachdem der dadurch gebildete Waschapparat aufgrund seiner statischen Anordnung lediglich in einer festgelegten Position des Solarkollektors diesen reinigen kann, ist diese Anordnung insoweit noch mit einem Makel behaftet. Es ist zwar erfindungsgemäß möglich, eine solche Anordnung zur Nachtzeit, wenn also das aus den zu reinigenden Solarkollektoren gebildete Kraftwerk außer Betrieb ist, zu benutzen um die in diesem Moment in eine Reinigungsposition verbrachten Kollektoren zu reinigen, soweit jedoch auch tagsüber Verschmutzungen der Solarkollektoren auftreten würden, wäre eine Reinigung nur unter den genannten Bedingungen möglich.

Vor diesem Hintergrund liegt der vorliegenden Erfindung die Aufgabe zu Grunde, einen Waschapparat und ein entsprechendes Waschverfahren für Solarkollektoren zu schaffen, bei dem in einem weiten Schwenkbereich des Solarkollektors eine Reinigung in einfacher Weise und weitestgehend selbsttätig möglich ist.

Dies gelingt durch ein Verfahren zur Reinigung von Solarkollektoren gemäß den Merkmalen des Hauptanspruchs sowie einen auf einem Solarkollektor verfahrbaren Waschapparat gemäß den Merkmalen des nebengeordneten Anspruchs 7. Weitere sinnvolle Ausgestaltungen des erfindungsgemäßen Verfahrens können den jeweiligen Unteransprüchen entnommen werden.

Der Waschapparat, welcher auf seiner Unterseite mit Waschdüsen zur Applikation von Waschwasser auf die Oberfläche des Solarkollektors und vorzugsweise einer Bürstenanordnung zur Reinigung derselben ausgestattet ist, kann direkt auf den Solarkollektor aufgesetzt werden, so dass eine Schienenführung im Bereich des Solarkollektors entfallen kann. Der Waschapparat ist vielmehr in dem Bereich der Längskanten des Solarkollektors in seiner Form derart an den Solarkollektor angepasst, dass der Waschapparat den Solarkollektor im Kantenbereich umgreift und mithilfe geeigneter Gleitmittel, längsverschieblich geführt ist. Eine derartige Anordnung erlaubt es, dass der Waschapparat sich auch unter entsprechender Neigung des Solarkollektors an dem selben festhält und somit eine Einrichtung des Solarkollektors in eine exakt definierte Reinigungsposition entfallen kann. Dadurch ist es vermieden, dass bei einer Reinigung während der Betriebsstunden des Solärkollektors eine Verschiebung desselben aus seiner Betriebsposition heraus erfolgen muss, wodurch ein erheblicher Effizienzverlust hinzunehmen wäre.

Ein weiterer Vorteil dieser Anordnung liegt darin, dass durch ein Verfahren des Waschapparates direkt auf der zu reinigenden Fläche ein definierter Abstand zwischen Reinigungsmitteln und Oberfläche hergestellt ist. So ist eine Beschädigung der Oberfläche vermieden und eine sehr effiziente Reinigung ermöglicht.

Zudem verbessert die vorliegende Erfindung die im Stand der Technik vorgeschlagene Anordnung dahingehend, dass ergänzend zu auf der Unterseite des Waschapparats angeordneten Waschdüsen auch Druckluftdüsen angeordnet sind, welche bei der Reinigung der Oberfläche des Solarkollektors zusätzliche Wirkung entfalten können. In der vorliegenden Anordnung hat dies zudem den Vorteil, dass die Oberfläche des Solarkollektors nicht nur vom Schmutz befreit wird, sondern zudem auch das Wasser, in dem der Schmutz gelöst ist, restlos von der Oberfläche des Solarkollektors entfernt werden kann. Dies hat den Vorteil, dass selbst stark verschmutztes Wasser noch so lange zur Reinigung des Solarkollektors eingesetzt werden kann, wie es zur Aufnahme von Schmutzpartikeln fähig ist. Eine deutlich stärkere Beaufschlagung des Waschwassers mit anfallendem Schmutz und diesbezüglich eine deutlich höhere Effizienz ist somit erfindungsgemäß erreicht.

Hierbei hat es besonders bewährt den Waschapparat mit einer so genannten an sich bekannten Schwertbürste auszustatten. Es handelt sich hierbei um einen elektromotorisch angetriebenen Endlosriemen, der mittels eines entsprechenden Borstenbesatzes quasi als Endlosbürste ausgebildet ist.

Demgemäß ist es sinnvoll, dass auch nach dem erfindungsgemäßen Verfahren eine Rückgewinnung des eingesetzten Waschwassers dadurch erfolgen kann, dass dem Waschapparat auf einer abflussseitigen Kante des Solarkollektors eine Auffangvorrichtung angeordnet ist, etwa eine Auffangrinne, über die das eingesetzte Waschwasser in einen auf dem Waschapparat mitgeführten Tank zurückgeführt werden kann. Das in dem Brauchwassertank vorgehaltene Wasser kann entweder zur erneuten Reinigung von Solarkollektoren eingesetzt werden oder entnommen und der Aufbereitung zugeführt werden. Alternativ zu einer Auffangrinne, in die das Wasser im wesentlichen aufgrund seiner Schwerkraft abgeführt wird, kann insbesondere zur Reinigung von horizontal eingestellten Solarkollektoren an Stelle der Auffangrinne eine Absaugvorrichtung vorgesehen sein. Der für den Betrieb der Absaugvorrichtung erforderliche Unterdruck kann mit Vorteil mithilfe eines Kompressors erzeugt werden, der vorteilhafter Weise gleichzeitig die für die Druckluftdüsen erforderliche Druckluft liefert. In diesem Fall ist es sinnvoll, zwischen Absaugvorrichtung und Ansaugseite des Kompressors einen Wasserabscheider vorzusehen, welche eine Trennung von Wasser und erzeugter Druckluft bewirkt.

Dem Waschapparat ist mit Vorteil ein Antrieb, etwa ein Elektromotor, zugeordnet, mithilfe dessen der Waschapparat auf dem Solarkollektor verfahrbar ist. Mit Vorteil ist der Waschapparat zudem selbsttätig einsetzbar, so dass aufgrund der durch die Längskanten der Solarkollektoren gebildete Führung sowie den Elektromotor eine selbstständige Bewegung auf den Solarkollektoren ermöglicht ist. Eine Einfädelung beziehungsweise Ausfädelung des Waschapparates ist an endständigen Solarkollektoren möglich.

Zur Verbesserung des Waschergebnisses ist die Winkelstellung der Waschdüsen und/oder der Druckluftdüsen derart gewählt, dass die Düsen in Richtung des zu erwartenden Wasserablaufs ausgerichtet sind. Dadurch wird eine Entfernung des Wassers von der zu reinigenden Fläche zusätzlich begünstigt. In sinnvoller Weiterbildung sind die Waschdüsen und/oder Druckluftdüsen in ihrer Winkelstellung derart einstellbar, dass jede Winkelstellung des zu reinigenden Solarkollektors berücksichtigt werden kann. Mit Vorteil erfolgt die Winkelstellung zudem selbsttätig.

Die Führung des Waschapparates auf dem Solarkollektor erfolgt durch eine Mehrzahl von Rad- und/oder Rollenachsen, welche voneinander beabstandet über die Unterfläche des Waschapparates verteilt sind. Die genannten Rad- und/oder Rollenachsen sind mit Vorteil insbesondere soweit voneinander beabstandet, dass ein Abstand zwischen zwei benachbarten Solarkollektoren dadurch überwunden werden kann, dass noch eine Mehrzahl von Rad- und/oder Rollenachsen auf einem Solarkollektor greifen, während die vordersten Räder beziehungsweise Rollen bereits den benachbarten Solarkollektor erreichen. Einander benachbarte Solarkollektoren sind üblicherweise auf denselben Receiver ausgerichtet, so dass sie üblicherweise auch die gleiche Winkelausrichtung haben. Eine unterschiedliche Winkelausrichtung zweier benachbarter Solarkollektoren, welche ein solches Überschreiten verunmöglichen würden, muss somit nicht.befürchtet werden.

Aufgrund unterschiedlicher möglicher Winkelstellungen der Solarkollektoren ist es sinnvoll, auch eine seitliche Führung des Wäschapparates dadurch herzustellen, dass im Bereich der Kanten des Solarkollektors auch seitliche Führungsrollen in dem Waschapparat vorgesehen sind. Diese seitlichen Führungsrollen weisen Laufflächen auf, welche im wesentlichen rechtwinklig zu der zu reinigenden Oberfläche verlaufen und somit für eine zusätzliche Führung des Waschapparates auf dem Solarkollektor sorgen.

In konkrete Ausgestaltung kann der Waschapparat jedoch auch als nicht-autarkes System betrieben werden, indem einem Waschapparat ein externes Waschfahrzeug zugeordnet wird. Dieses fährt zwischen den Solarkollektoren hindurch, während über dem Waschfahrzeug zugeordnete Auslegearme der Waschapparat oder die Waschapparate eine Verbindung mittels Seilwinden zwischen Waschfahrzeug und Waschapparaten realisiert ist. Die Waschapparate können über die Auslegearme mithilfe der Seilwinden ausgeschwenkt und in die Solarkollektoren eingefädelt werden, wonach das Waschfahrzeug den Waschapparaten entlang den Solarkollektoren folgt. Es erfolgt dabei eine ver- und Entsorgung der Waschapparate vom Waschfahrzeug aus, wobei das Waschfahrzeug wahlweise Energie und/oder Waschwasser bevorraten und liefern kann.

Die vorstehend beschriebene Erfindung wird im folgenden anhand eines in der Zeichnung dargestellten Ausführungsbeispiels näher erläutert.

Es zeigen
- Figur 1: einen Waschapparat, welcher auf einen Solarkollektor aufgesetzt ist in einer isometrischen Darstellung, und
- Figur 2: den Waschapparat gemäß Figur 1 in einer seitlichen Draufsicht.

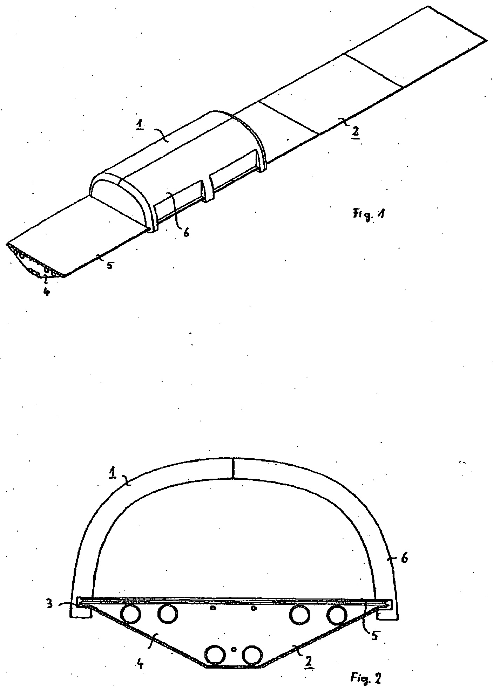

Figur 1 zeigt einen Waschapparat 1 zur Reinigung von Solarkollektoren 2, welcher auf einem Solarkollektor 2 aufgesetzt ist. Eine Reinigung des Solarkollektors 2 kann dabei in unterschiedlichen Winkelstellungen des Tragwerks 4 erfolgen, nachdem der Waschapparat 1 die Kanten des Solarkollektors 2 klammernd umschließt. Der Waschapparat 1 ist dabei auf Rollen gelagert, welche eine Verfahrbarkeit des Waschapparates 1 in Längsrichtung des Solarkollektors 2 ermöglichen. Es kann somit entfallen, dem Solarkollektor 2 eine Führungsschiene oder eine ähnliche Führungseinrichtung für den Waschapparat 1 zuzuordnen. Ein Einsatz des Waschapparates 1 kann sowohl auf Heliostaten für linienfokussierte solarthermische Kraftwerke als auch für Parabolrinnen oder Photovoltaikanlagen eingesetzt werden. In jedem Fall ist die dem Solarkollektor 2 zugewandte Seite des Waschapparates 1 der Oberfläche beziehungsweise der Spiegelfläche 5 des Solarkollektors 2 zumindest weitgehend angepasst. Im Laufe der Reinigung gleitet der Waschapparat 1 über den Solarkollektor 2 hinweg, wobei aus einem auf dem Waschapparat 1 mitgeführten Wassertank über entsprechende Waschdüsen Waschwasser auf die Spiegelfläche 5 des Solarkollektors 2 aufgebracht wird und gegebenenfalls über Bürstenanordnungen eine zusätzliche Reinigung des Solarkollektors 2 bewirkt wird. Die derart gestaltete Reinigung des Solarkollektors 2 wird zusätzlich mithilfe von Druckluftdüsen unterstützt, welche zum Einen ebenfalls Schmutzpartikel von der Spiegelfläche 5 lösen und zum Anderen die Spiegelfläche ihrerseits von Waschwasser befreien. Das Waschwasser kann mithilfe einer Absaugvorrichtung wieder zurück in einen innerhalb des Gehäuses 6 des Waschapparates 1 untergebrachten Wassertank zurückgepumpt werden, so dass die gereinigte Spiegelfläche 5 weitgehend trocken hinterlassen wird. Es ist somit eine Reinigung bereits mit relativ verunreinigtem Wasser möglich, da aufgrund der Reinigung mit Druckluft und der Trocknung des Solarkollektors 2 eine weitgehend rückstandsfreie Entfernung von Schmutz und Wasser gewährleistet wird.

Figur 2 zeigt den zuvor beschriebenen Waschapparat 1 in einer Seitenansicht, wobei insbesondere das Umgreifen des Solarkollektors 2 durch den Waschapparat 1 im Vordergrund steht. Im Bereich der Seitenkanten des Solarkollektors 2 ist in dem Waschapparat 1 beidseitig jeweils eine Aufnahme 3 für die Seitenkanten des Solarkollektors 2. vorgesehen, welche die Kanten aufnimmt und in deren Bereich mithilfe von verschiedentlich ausgerichteten Rollen eine Lagerung des Waschapparates 1 auf dem Solarkollektor 2 bewirkt wird. Durch zusätzliche Führungsrollen, welche mit ihrer Lauffläche im wesentlichen senkrecht zu der Spiegelfläche 5 angeordnet sind, wird eine Zentrierung des Waschapparates 1 auf dem Solarkollektor 2 bewirkt und die Führung des Waschapparates 1 vervollständigt. Dem Waschapparat 1 ist ein Motor zugeordnet, so dass eine selbsttätige Reinigung eines Solarkollektors 2 erfolgen kann. Eine Reinigung mehrerer Solarkollektoren 2 kann dadurch erfolgen, dass sich der Waschapparat 1 über das Ende eines Solarkollektors 2 hinausschiebt, wobei die Abmessungen des Waschapparates 1, insbesondere die Achsabstände, so gewählt sind, dass auf dem ersten Solarkollektor noch ein Halt besteht, wenn der zweite Solarkollektor erreicht wird. Auf diese Weise lassen sich Abstände zwischen den Solarkollektoren 2 überbrücken und eine selbsttätige Reinigung einer Vielzahl von Solarkollektoren 2 ist mit der erfindungsgemäßen Anordnung ermöglicht.

Vorstehend ist somit ein Waschapparat und ein Waschverfahren für Solarkollektoren beschrieben, in welchem ein Haltesystem verwirklicht ist, so dass ein Aufsetzen des Waschapparates auch ohne Führungsschienen direkt auf den zu reinigenden Solarkollektor ermöglicht ist. Ferner werden bekannte Waschverfahren für Solarkollektoren dahingehend verbessert, dass eine effizientere Reinigung mithilfe von Druckluft Wasser sparend und Ressourcen schonend verwirklicht ist.

### BEZUGSZEICHENLISTE

- 1: Waschapparat
- 2: Solarkollektor
- 3: Aufnahme
- 4: Tragwerk
- 5: Spiegelfläche
- 6: Gehäuse

## Patentansprüche

1. Verfahren zur Reinigung von schwenkbaren Solarkollektoren (2) mittels eines auf dem Solarkollektor (2) verfahrbaren Waschapparats (1), welcher mithilfe von Waschdüsen und/oder Bürsten Waschwasser auf die Oberfläche des Solarkollektors (2) aufbringt und die Oberfläche abwäscht,
**dadurch gekennzeichnet, dass** der Waschapparat (1) mittels einer Mehrzahl von Rad- und/oder Rollenachsen, welche voneinander beabstandet über die Unterfläche des Waschapparates verteilt sind, auf einer Spiegelfläche (5) des Solarkollektors aufgesetzt ist und den Solarkollektor (2) im Kantenbereich derart umgreift, dass der Waschapparat (1) unmittelbar auf der Spiegelfläche (5) des Solarkollektors (2) längsverschieblich geführt wird.

2. Verfahren gemäß Anspruch 1, **dadurch gekennzeichnet, dass** das von dem Waschapparat (1) auf die Oberfläche des Solarkollektors (2) aufgebrachte Wasser mithilfe von Druckluft, und vorzugsweise unter Zuhilfenahme zumindest einer Bürstenanordnung, von der Oberfläche entfernt wird.

3. Verfahren gemäß einem der Ansprüche 1 oder 2, **dadurch gekennzeichnet, dass** das auf die Oberfläche des Solarkollektors (2) aufgebrachte Wasser mithilfe einer, vorzugsweise rinnenförmigen, Auffangvorrichtung aufgefangen wird.

4. Verfahren gemäß einem der Ansprüche 1 oder 2, **dadurch gekennzeichnet, dass** das auf die Oberfläche des Solarkollektors (2) aufgebrachte Wasser mithilfe einer Absaugvorrichtung abgesaugt wird.

5. Verfahren gemäß einem der vorhergehenden Ansprüche, **dadurch gekennzeichnet, dass** der Waschapparat (1) motorgetrieben und vorzugsweise selbsttätig auf dem Solarkollektor (2) verfahrbar ist.

6. Verfahren gemäß einem der vorhergehenden Ansprüche, **dadurch gekennzeichnet, dass** der Waschapparat (1) an einem Ende eines Solarkollektors (2) eingefädelt wird.

7. Auf einem schwenkbaren Solarkollektor (2) verfahrbarer Waschapparat (1) zur Reinigung desselben, welcher auf seiner der Oberfläche des Solarkollektors (2) zugewandten Seite Waschdüsen zur Applikation von Waschwasser auf die Oberfläche des Solarkollektors (2) aufweist, **dadurch gekennzeichnet, dass** der Waschapparat (1) mittels einer Mehrzahl von Rad- und/oder Rollenachsen, welche voneinander beabstandet über die Unterfläche des Waschapparates verteilt sind, auf der dem Waschapparat (1) zugewandten Fläche des Solarkollektors (2) aufsetzbar ist und den Solarkollektor (2) im Kantenbereich derart umgreifen kann, dass der Waschapparat (1) unmittelbar auf der dem Waschapparat (1) zugewandten Fläche des Solarkollektors (2) längsverschieblich geführt werden kann.

8. Waschapparat gemäß Anspruch 7, **dadurch gekennzeichnet, dass** der Waschapparat (1) zumindest im Kantenbereich auf Rollen und/oder Rädern aufgelagert ist.

9. Waschapparat gemäß einem der Ansprüche 7 oder 8, **dadurch gekennzeichnet, dass** der Waschapparat (1) mittels eines motorischen Antriebs zum selbsttätigen Befahren des Solarkollektors (2) ertüchtigt ist.

10. Waschapparat gemäß einem der Ansprüche 7 bis 9, **dadurch gekennzeichnet, dass** dem Waschapparat (1) auf seiner der Oberfläche des Solarkollektors (2) zugewandten Seite Druckluftdüsen zugeordnet sind.

11. Waschapparat gemäß einem der Ansprüche 7 bis 10, **dadurch gekennzeichnet, dass** dem Waschapparat (1) im Bereich zumindest der in Ablaufrichtung des Waschwassers gelegenen Kante des Solarkollektors (2) eine Auffangvorrichtung, vorzugsweise in Form einer Auffangrinne, zur Aufnahme des verbrauchten Waschwassers zugeordnet ist.

12. Waschapparat gemäß einem der Ansprüche 7 bis 10, **dadurch gekennzeichnet, dass** dem Waschapparat (1) eine Absaugvorrichtung, insbesondere zumindest eine Absaugdüse derart zugeordnet ist, dass das verbrauchte Waschwasser mithilfe der Absaugvorrichtung von der Oberfläche des Solarkollektors (2) entfernbar ist.

13. Waschapparat gemäß Anspruch 12, **dadurch gekennzeichnet, dass** der für den Betrieb der Absaugvorrichtung erforderliche Unterdruck mithilfe eines zur Erzeugung von Druckluft zur Versorgung von Druckluftdüsen vorgesehenen Kompressors erzeugt wird.

14. Waschapparat gemäß Anspruch 13, **dadurch gekennzeichnet, dass** zwischen der Absaugvorrichtung und der Ansaugseite des Kompressors ein Wasserabscheider vorgesehen ist.

15. Waschapparat gemäß einem der Ansprüche 7 bis 14, **dadurch gekennzeichnet, dass** die Waschdüsen und/oder Druckluftdüsen derart schräg gegen die Oberfläche des Solarkollektors (2) angestellt sind, dass das von ihnen Applizierte Wasser bzw. die Druckluft in Ablaufrichtung des Wassers ausgerichtet sind.

16. Waschapparat gemäß Anspruch 15, **dadurch gekennzeichnet, dass** die Winkelstellung der Waschdüsen und/oder der Druckluftdüsen, vorzugsweise selbsttätig, einstellbar ist.

17. Waschapparat gemäß einem der Ansprüche 7 bis 16, **dadurch gekennzeichnet, dass** dem Waschapparat (1) im Bereich der Kanten des Solarkollektors (2) seitlich angeordnete Führungsrollen zugeordnet sind, deren Laufflächen an den Kanten des Solarkollektors (2) anliegen.

18. Waschapparat gemäß einem der Ansprüche 7 bis 17, **dadurch gekennzeichnet, dass** zumindest ein Teil der Druckluftdüsen in Bewegungsrichtung des Waschapparats (1) hinten endständig angeordnet ist.

19. Waschapparat gemäß einem der Ansprüche 7 bis 18, **dadurch gekennzeichnet, dass** dem Waschapparat (1) ein externes Waschfahrzeug zugeordnet ist, welchem der Waschapparat (1) über, vorzugsweise flexible, Ver- und Entsorgungsleitungen anverbunden ist.

20. Waschapparat gemäß Anspruch 19, **dadurch gekennzeichnet, dass** einem Waschfahrzeug mehrere Waschapparate (1) zugeordnet sind.

21. Waschapparat gemäß Anspruch 20, **dadurch gekennzeichnet, dass** die Waschapparate (1) des Waschfahrzeugs mithilfe von Seilwinden an dem Waschfahrzeug zugeordneten Auslegearmen verschwenkbar und höhenverstellbar aufgehängt sind.

## Claims

1. A method for cleaning pivotable solar panels (2) by means of a washing apparatus (1) which can be moved on the solar panel (2) and which applies washing water to the surface of the solar panel (2) by using washing jets and/or brushes and washes the surface, **characterized in that** the washing apparatus (1) is placed onto a mirror surface (5) of the solar panel by means of a plurality of wheel and/or roller axles which are distributed, spaced from each other, over the bottom surface of the washing apparatus, and engages around the solar panel (2) in the edge region in such a way that the washing apparatus (1) is guided in a longitudinally displaceable manner directly on the mirror surface (5) of the solar panel (2).

2. A method according to claim 1, **characterized in that** the water applied by the washing apparatus (1) to the surface of the solar panel (2) is removed from the surface by using compressed air, and preferably by using at least one brush assembly.

3. A method according to one of the claims 1 or 2, **characterized in that** the water applied to the surface of the solar panel (2) is captured by using a capture apparatus, preferably in the form of a channel.

4. A method according to one of the claims 1 or 2, **characterized in that** the water applied to the surface of the solar panel (2) is suctioned off by using a suction apparatus.

5. A method according to one of the preceding claims, **characterized in that** the washing apparatus (1) is motor-driven and can be moved on the solar panel (2) preferably automatically.

6. A method according to one of the preceding claims, **characterized in that** the washing apparatus (1) is threaded on at one end of a solar panel (2).

7. A washing apparatus (1) that can be moved on a pivotable solar panel (2) for cleaning said panel, which comprises washing jets for the application of washing water to the surface of the solar panel (2) on its side that faces the surface of the solar panel (2), **characterized in that** the washing apparatus (1) can be placed onto the surface of the solar panel (2) facing the washing apparatus (1) by means of a plurality of wheel and/or roller axles which are distributed, spaced from each other, over the bottom surface of the washing apparatus, and can engage around the solar panel (2) in the edge region in such a way that the washing apparatus (1) can be guided in a longitudinally displaceable manner directly on the surface of the solar panel (2) facing the washing apparatus (1).

8. A washing apparatus according to claim 7, **characterized in that** the washing apparatus (1) is mounted on rollers and/or wheels, at least in the edge region.

9. A washing apparatus according to one of the claims 7 or 8, **characterized in that** the washing apparatus (1) is empowered for automatically moving along the solar panel (2) by means of a motor drive.

10. A washing apparatus according to one of the claims 7 to 9, **characterized in that** compressed-air jets are assigned to the washing apparatus (1) on its side that faces the surface of the solar panel (2).

11. A washing apparatus according to one of the claims 7 to 10, **characterized in that** a capture device, preferably in the form of a capture channel for accommodating the used washing water, is assigned to the washing apparatus (1) in the region at least of the edge of the solar panel (2) situated in the run-off direction of the washing water.

12. A washing apparatus according to one of the claims 7 to 10, **characterized in that** a suction apparatus, especially at least one suction nozzle, is assigned to the washing apparatus (1) in such a way that the used washing water can be removed from the surface of the solar panel (2) by means of the suction apparatus.

13. A washing apparatus according to claim 12, **characterized in that** the vacuum required for operation of the suction apparatus is produced by using a compressor provided for generating compressed air for supplying compressed-air jets.

14. A washing apparatus according to claim 13, **characterized in that** a water separator is provided between the suction apparatus and the intake side of the compressor.

15. A washing apparatus according to one of the claims 7 to 14, **characterized in that** the washing jets and/or the compressed-air jets are set at an incline relative to the surface of the solar panel (2) in such a way that the water or compressed air applied by them is oriented in the run-off direction of the water.

16. A washing apparatus according to claim 15, **characterized in that** the angular position of the washing jets and/or the compressed-air jets can be adjusted, preferably automatically.

17. A washing apparatus according to one of the claims 7 to 16, **characterized in that** laterally arranged guide rollers are assigned to the washing apparatus (1) in the region of the edges of the solar panel (2), whose running surfaces rest on the edges of the solar panel (2).

18. A washing apparatus according to one of the claims 7 to 17, **characterized in that** at least a part of the compressed-air jets is disposed in the movement direction of the washing apparatus (1) at the back in the end position.

19. A washing apparatus according to one of the claims 7 to 18, **characterized in that** an external washing vehicle is assigned to the washing apparatus (1), to which the washing apparatus is connected by way of feed and discharge lines, preferably flexible lines.

20. A washing apparatus according to claim 19, **characterized in that** multiple washing apparatuses (1) are assigned to one washing vehicle.

21. A washing apparatus according to claim 20, **characterized in that** the washing apparatuses (1) of the washing vehicle are suspended in a pivotable and height-adjustable manner by means of cable winches on extension arms assigned to the washing vehicle.

## Revendications

1. Procédé pour le nettoyage de capteurs solaires pivotants (2) au moyen d'un appareil de lavage (1) pouvant être déplacé sur le capteur solaire (2), qui applique de l'eau de lavage sur la surface du capteur solaire (2) à l'aide de buses de lavage et/ou de brosses et nettoie la surface, **caractérisé en ce que** l'appareil de lavage (1) est posé par l'intermédiaire de plusieurs axes de roulettes et/ou de rouleaux, répartis à distance les uns des autres sur la face inférieure de l'appareil de lavage, sur une surface réfléchissante (5) du capteur solaire et entoure le bord du capteur solaire (2) de telle manière que l'appareil de lavage (1) est guidé en translation longitudinale directement sur la surface réfléchissante (5) du capteur solaire (2).

2. Procédé selon la revendication 1, **caractérisé en ce que** l'eau appliquée par l'appareil de lavage (1) sur la surface du capteur solaire (2) est chassée de la surface à l'aide d'air comprimé et de préférence avec l'aide d'au moins une disposition de brosses.

3. Procédé selon l'une des revendications 1 ou 2, **caractérisé en ce que** l'eau appliquée sur la surface du capteur solaire (2) est recueillie à l'aide d'un dispositif capteur, de préférence en forme de gouttière.

4. Procédé selon l'une des revendications 1 ou 2, **caractérisé en ce que** l'eau appliquée sur la surface du capteur solaire (2) est aspirée à l'aide d'un dispositif d'aspiration.

5. Procédé selon l'une des revendications précédentes, **caractérisé en ce que** l'appareil de lavage (1) peut être déplacé sur le capteur solaire (2) sous l'action d'un moteur et de préférence de façon automatique.

6. Procédé selon l'une des revendications précédentes, **caractérisé en ce que** l'appareil de lavage (1) est enfilé sur une extrémité du capteur solaire (2).

7. Appareil de lavage (1) déplaçable sur un capteur solaire pivotant (2) pour nettoyer celui-ci, qui présente sur son côté tourné vers la surface du capteur solaire (2) des buses de lavage destinées à appliquer de l'eau de lavage sur la surface du capteur solaire (2), **caractérisé en ce que** l'appareil de lavage (1) peut être posé par l'intermédiaire de plusieurs axes de roulettes et/ou de rouleaux, répartis à distance les uns des autres sur la face inférieure de l'appareil de lavage, sur la face du capteur solaire (2) tournée vers l'appareil de lavage (1) et entoure le bord du capteur solaire (2) de telle manière que l'appareil de lavage (1) peut être guidé en translation longitudinale directement sur la face du capteur solaire (2) tournée vers l'appareil de lavage (1).

8. Appareil de lavage selon la revendication 7, **caractérisé en ce que** l'appareil de lavage (1) est supporté sur des rouleaux et/ou des roulettes au moins dans la zone du bord.

9. Appareil de lavage selon l'une des revendications 7 ou 8, **caractérisé en ce que** l'appareil de lavage (1) est équipé d'un moteur de propulsion qui lui permet de se déplacer de façon automatique sur le capteur solaire (2).

10. Appareil de lavage selon l'une des revendications 7 à 9, **caractérisé en ce que** l'appareil de lavage (1) possède sur son côté tourné vers la surface du capteur solaire (2) des buses à air comprimé.

11. Appareil de lavage selon l'une des revendications 7 à 10, **caractérisé en ce que** l'appareil de lavage (1) est associé, au moins au niveau du bord du capteur solaire (2) situé dans le sens d'écoulement de l'eau de lavage, à un dispositif capteur, prenant de préférence la forme d'une gouttière, pour recueillir l'eau de lavage usée.

12. Appareil de lavage selon l'une des revendications 7 bis 10, **caractérisé en ce que** l'appareil de lavage (1) est associé à un dispositif d'aspiration, en particulier à au moins une buse d'aspiration, de telle façon que l'eau de lavage usée puisse être enlevée de la surface du capteur solaire (2) à l'aide du dispositif d'aspiration.

13. Appareil de lavage selon la revendication 12, **caractérisé en ce que** la dépression nécessaire au fonctionnement du dispositif de lavage est produite à l'aide d'un compresseur prévu pour produire de l'air comprimé pour l'alimentation des buses à air comprimé.

14. Appareil de lavage selon la revendication 13, **caractérisé en ce qu'**un séparateur d'eau est prévu entre le dispositif d'aspiration et le côté d'aspiration du compresseur.

15. Appareil de lavage selon l'une des revendications 7 à 14, **caractérisé en ce que** les buses de lavage et/ou les buses à air comprimé sont orientées à l'oblique vers la surface du capteur solaire (2) de telle façon que l'eau ou l'air comprimé qu'elles appliquent soient dirigés dans le sens d'écoulement de l'eau.

16. Appareil de lavage selon la revendication 15, **caractérisé en ce que** l'angulation des buses de lavage et/ou des buses à air comprimé est réglable, de préférence de façon automatique.

17. Appareil de lavage selon l'une des revendications 7 à 16, **caractérisé en ce que** l'appareil de lavage (1) est associé à des rouleaux de guidage disposés latéralement au niveau des bords du capteur solaire (2), dont les surfaces de roulement reposent sur les bords du capteur solaire (2).

18. Appareil de lavage selon l'une des revendications 7 à 17, **caractérisé en ce qu'**une partie au moins des buses à air comprimé est disposée à l'extrémité arrière de l'appareil de lavage (1) dans le sens de déplacement.

19. Appareil de lavage selon l'une des revendications 7 à 18, **caractérisé en ce que** l'appareil de lavage (1) est associé à un véhicule de lavage externe, auquel l'appareil de lavage (1) est relié par des conduites d'alimentation et d'évacuation, de préférence flexibles.

20. Appareil de lavage selon la revendication 19, **caractérisé en ce que** plusieurs appareils de lavage (1) sont associés à un même véhicule de lavage.

21. Appareil de lavage selon la revendication 20, **caractérisé en ce que** les appareils de lavage (1) du véhicule de lavage sont suspendus de façon orientable et réglable en hauteur à l'aide de treuils à câble sur des bras associés au véhicule de lavage.
